(19) Europäisches Patentamt
European Patent Office
Office européen des brevets

(11) **EP 2 642 287 A2**

(12) **EUROPEAN PATENT APPLICATION**

(43) Date of publication:
**25.09.2013 Bulletin 2013/39**

(51) Int Cl.:
***G01N 30/88*** *(2006.01)*        *G01N 30/86* *(2006.01)*

(21) Application number: **13159964.9**

(22) Date of filing: **19.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.03.2012  JP 2012064154**

(71) Applicant: **Takasago International Corporation Tokyo 144-8721 (JP)**

(72) Inventors:
• **Sugimoto, Daisuke**
  **Hiratsuka-shi,**
  **Kanagawa (JP)**

• **Yaguchi, Yoshihiro**
  **Hiratsuka-shi,**
  **Kanagawa (JP)**
• **Zaizen, Kyoko**
  **Hiratsuka-shi,**
  **Kanagawa (JP)**
• **Saima, Toshinori**
  **Hiratsuka-shi,**
  **Kanagawa (JP)**

(74) Representative: **Takeuchi, Maya**
  **Fédit-Loriot**
  **38, avenue Hoche**
  **75008 Paris (FR)**

(54) **Method for evaluating sensory stimulus component**

(57)    A method for evaluating a sensory stimulus component in a test component with a taste-analyzing liquid chromatograph system. The method includes: measuring the test component with the taste-analyzing liquid chromatograph system to obtain taste evaluation data; and evaluating a persistence of a sensory stimulus intensity of the test component from a continuous intensity change of the test component using the taste evaluation data as an index.

FIG. 7

TIME (MIN)

MEASUREMENT RESULT FOR CA20

A1: MAXIMUM VALUE OF BITTERNESS (+)

A2: $T_1$ OF BITTERNESS (+)

B1: MAXIMUM VALUE OF BITTERNESS (-)

B2: $T_1$ OF BITTERNESS (-)

C1: MAXIMUM VALUE OF ASTRINGENCY

C2: $T_1$ OF ASTRINGENCY

**Description**

CROSS-REFERENCE TO RELATED APPLICATIONS

This application claims priority from Japanese Patent Application No. 2012-064154 filed on March 21, 2012, the entire subject matter of which is incorporated herein by reference.

BACKGROUND OF THE INVENTION

Technical Field of the Invention

The present invention relates to a method for evaluating a test component, specifically a method for evaluating the persistence of a sensory stimulus intensity of a test component acting on skin, inside of the mouth or the like.

Background Art

Sensory stimulus components which are contained in skin topical agents, oral compositions or the like and cause a sensation in a user have been evaluated mostly by using sensory statistical evaluation that relies on human senses.

Other evaluation methods are also available, and examples thereof include a method that measures keratinous moisture levels and transdermal moisture transpiration rates, a method that measures a current perception threshold (CPT), a method that measures blood IgE, an evaluation method based on mouse scratching behaviors, a method that measures in vitro calcium ion concentrations (Patent Document 1), a method that measures an electrocardiogram and a galvanic skin reflex (Patent Document 2), and a method that evaluates active substances with TRPA1 (Patent Document 3).

With regard to taste intensity, a taste perception device is available, which can evaluate taste without relying on the human sense of taste, as disclosed in, for example, Patent Document 4. In this taste perception device, the taste of a sample to be analyzed is evaluated from the potential difference between a lipid membrane electrode and a reference electrode as a reference through interaction of a lipid membrane (polymer membrane) and a chemical substance to be analyzed.

Patent Document 5 discloses a method for evaluating the intensity of aftertaste by using a taste perception device. In the method described in Patent Document 5, a taste sensor (molecular membrane sensor) is used to evaluate the taste by two kinds of tastes, the "initial taste" immediately after a food is put in the mouth, and the "aftertaste" that lingers after the food is swallowed. In this method, the potential difference of a sample solution relative to the zero potential of a reference solution is measured as the initial taste, and the potential difference when the reference solution is measured again after gently washing the sensor is measured as the aftertaste and the measurement is performed, as follows.

Step (1): First, a taste sensor is dipped in a reference solution (a substantially tasteless solution containing 30 mM of KCl and 0.3 mM of tartaric acid, corresponding to human saliva) to obtain a membrane potential Vr.

Step (2): The taste sensor is then dipped in a sample solution, bringing a change of the membrane potential to Vs through interaction with the taste substance. The membrane potential change "Vs - Vr" is obtained as the first sensor output "relative value", and corresponds to an initial taste such as an acid taste and a salty taste.

Step (3): Then, the taste sensor is briefly washed with the reference solution.

Step (4): The taste sensor is dipped in the reference solution again to obtain a membrane potential Vr'. When a bitterness substance or an astringent substance was adsorbed to the lipid membrane surface in step (3), the membrane potential becomes Vr' upon dipping the taste sensor in the same reference solution used in step (1). The membrane potential change "Vr' - Vr" is obtained as the second sensor output "CPA value" (CPA = Change of membrane Potential by Adsorption), and corresponds to an aftertaste such as bitterness and astringency.

Step (5): The taste sensor is thoroughly washed with an alcohol washing liquid to completely remove the taste substance adsorbed on the lipid membrane surface.

Step (6): The taste sensor is contacted again with the reference solution. The taste sensor is maintained until the taste sensor signal output becomes stable, and a return of the signal level to the initial level, specifically the level of step (1), is confirmed.

Step (7): If the signal level does not return to the initial level in step (6), step (5) and step (6) are performed again until the signal level returns to the initial level.

Patent Documents

Patent Document 1: JP- A- 2002- 372530
Patent Document 2: JP- A- 2006- 75364
Patent Document 3: US 2009/148938 A1
Patent Document 4: JP- A- 3- 163351
Patent Document 5: JP- A- 2002- 243695

SUMMARY OF THE INVENTION

Methods of sensory evaluation by human lack objectivity, and it has been difficult to objectively compare differences in sensory stimulus with specific numerical values. Further, the above-described conventional taste perception devices are intended to evaluate the quality of the initial taste (such as an acid taste and a salty taste) and the aftertaste (such as bitterness and astringency) of the whole sample to be analyzed, and are unable to individually grasp the lingering perception of the various tastes contained in a sample. Accordingly, it has not been possible with the methods of the related art to objectively examine which component has a persistent sensory stimulus intensity.

The present invention has been made in view of these problems, and illustrative aspects of the present invention provide a method for evaluating a sensory stimulus component whereby differences in sensory stimulus, particularly the persistence of a sensory stimulus intensity of a test component (the intensity of the lingering perception of a sensory stimulus component) can be evaluated both objectively and specifically.

The present inventors conducted intensive studies to solve the foregoing problems, and found that the persistence of a sensory stimulus intensity of a test component can be evaluated by using as an index the taste evaluation data obtained from a taste-analyzing liquid chromatograph system. The present invention has been completed on the basis of this finding.

That is, the present invention provides the following method for evaluating a sensory stimulus component.

[1] A method for evaluating a sensory stimulus component in a test component with a taste-analyzing liquid chromatograph system,
the method comprising:

measuring the test component with the taste-analyzing liquid chromatograph system to obtain taste evaluation data; and
evaluating a persistence of a sensory stimulus intensity of the test component from a continuous intensity change of the test component using the taste evaluation data as an index.

[2] The method according to [1], wherein a plurality of similar test components is measured with the taste-analyzing liquid chromatograph system to obtain taste evaluation data, and the test components are distinguished into similar groups to evaluate the persistence of sensory stimulus intensities of the test components using the taste evaluation data as an index.

[3] The method according to [1] or [2], wherein the taste-analyzing liquid chromatograph system includes:

(a) a taste detecting part for detecting the sensory stimulus component in the test component over a time course, which includes a plurality of taste sensors each of which has a different response characteristic; and
(b) a signal processing part that processes a detection signal obtained from the plurality of the taste sensors to determine taste evaluation data concerning each sensory stimulus component.

[4] The method according to [3], wherein the taste evaluation data is measured by using an intensity of a sensor reaction of the taste sensor as an index.

[5] The method according to [4], wherein the evaluation is based on a proportion of a magnitude of the intensity of the sensor reaction with respect to a maximum intensity value of the sensor reaction as measured after a certain elapsed time period from a time at which the sensor reaction has the maximum intensity value.

[6] The method according to [5], wherein the evaluation is based on an evaluation value calculated according to the following equation (1):

$$\text{Evaluation value} = \sum_{n=1}^{k} \frac{P_n(T_1)}{P_n(T_{\max})} C_n \qquad (1)$$

wherein k is the number of taste sensors used for evaluation, n means the nth sensor, $P_n(T)$ is an absolute value of the sensor reaction at a retention time T, $T_{max}$ is a time at which the absolute value of the sensor reaction has the maximum value, $T_1$ is a certain elapsed time period from the time at which the absolute value of the sensor reaction has the maximum value ($T_1 \geq T_{max}$), and $C_n$ is a coefficient representing a degree of contribution of the nth sensor reaction to the sensory intensity evaluation.

[7] The method according to [4], wherein the evaluation is based on a cumulative value of a proportion of a magnitude of the intensity of the sensor reaction with respect to a maximum intensity value of the sensor reaction as measured after a certain elapsed time period from a time at which the sensor reaction has the maximum intensity value.

[8] The method according to [7], wherein the evaluation is based on an evaluation value calculated according to the following equation (2)

$$\text{Evaluation value} = \sum_{n=1}^{k} \left( \sum_{t=T_{max}}^{T_1} \frac{P_n(t)}{P_n(T_{max})} C_n \right) \quad (2)$$

wherein k is the number of taste sensors used for evaluation, n means the nth sensor, $P_n(t)$ is an absolute value of the sensor reaction at a retention time t, $T_{max}$ is a time at which the absolute value of the sensor reaction has the maximum value, $T_1$ is a certain elapsed time period from the time at which the absolute value of the sensor reaction has the maximum value ($T_1 \geq T_{max}$), and $C_n$ is a coefficient representing a degree of contribution of the nth sensor reaction to the sensory intensity evaluation.

[9] The method according to any one of [1] to [8], wherein the test component is a cool sense stimulus component or a warm sense stimulus component.

[10] The method according to [9], wherein the cool sense stimulus component or the warm sense stimulus component reacts with taste sensors responsive to bitterness (+), bitterness (-), and astringency, and the taste evaluation data is measured by using intensities of the sensor reactions of the taste sensors as indices.

According to the evaluation method of the present invention, the excellent evaluation method for the persistence of a sensory stimulus intensity of a test component in the skin and inside of the mouth can be provided. That is, the present invention enables the objective and specific evaluation of a sensory stimulus component associated with skin and inside of the mouth. The evaluation method of the present invention also can be used for the screening of various sensory stimulus components such as a cool sense stimulus component and a warm sense stimulus component, and for the evaluation of skin and oral conditions.

BRIEF DESCRIPTION OF THE DRAWINGS

FIG. 1 is a block diagram of a relevant portion of a first taste-analyzing liquid chromatograph system primarily illustrating the channel configuration.
FIG. 2 is a schematic top view of a flow sensor of a taste detecting part.
FIG. 3 is a schematic perspective view of the flow sensor of the taste detecting part.
FIG. 4 is a cross sectional view taken at line A-A' of FIG. 2.
FIG. 5 is a channel block diagram of a flow sensor of the taste detecting part.
FIG. 6 is a block diagram of a relevant portion of a second taste-analyzing liquid chromatograph system primarily illustrating the channel configuration.
FIG. 7 is a graph representing the result of the evaluation performed for CA20 with respect to taste sensor response and lingering perception.
FIG. 8 is a graph representing the intensities of lingering perception of each of cool sense stimulus components.

DETAILED DESCRIPTION OF THE INVENTION

The present invention is described below in detail.

The present invention provides a method for evaluating the persistence of a sensory stimulus intensity of a sensory stimulus component in the skin and inside of the mouth, using as an index the taste evaluation data of the sensory stimulus component obtained by using a taste-analyzing liquid chromatograph system (hereinafter, the method will also be referred to as "the present evaluation method").

The present evaluation method can accurately and conveniently evaluate the persistence of a sensory stimulus in a test component perceived in the skin and inside of the mouth.

As used herein, "sensory stimulus" means a stimulus sensation elicited by chemical components contained in skin topical agents, oral compositions or the like, and by other environmental factors. Specific examples thereof include a cool sensation, a warm sensation, a pungent taste (a sense of pain), and an astringent taste in the skin or inside of the mouth. Note that the sensory stimulus components are components that elicit stimulus sensations such as above. Specific examples thereof include a cool sense stimulus component, a warm sense stimulus component, a pungent (pain) stimulus component, an astringent stimulus component and the like. The sensory stimulus components differ from common basic taste components such as sweetness, bitterness, umami, salty taste, and acid taste.

The persistence of a sensory stimulus intensity means the duration from the time at which the stimulus intensity reaches the maximum by contacting the sensory stimulus component with the skin or inside of the mouth to the time at which the stimulation is disappeared, that is, the lingering perception of the sensory stimulus component. The sensory stimulus is perceived when the sensory stimulus component is contacted with the skin or inside of the mouth. The sensory stimulus intensity then reaches the maximum value, and attenuates over time. The sensory stimulus becomes more persistent and the lingering perception increases as the attenuation time of the sensory stimulus intensity from the time at which its maximum value is reached becomes longer.

When the taste- analyzing liquid chromatograph system is used without a liquid chromatograph, the taste-analyzing liquid chromatograph system can evaluate the response of a lipid membrane and a test sample from the membrane potential or membrane resistance by contacting the test sample with a plurality of taste sensors that reacts with substances such as potassium chloride (salty taste), tartaric acid (acid taste), sodium glutamate (umami), quinine (bitterness (+) ), iso- $\alpha$ acid (bitterness (- ) ), and tannic acid (astringency), without separating the test sample (test component) to be analyzed.

When the taste- analyzing liquid chromatograph system is used in combination of a liquid chromatograph, the test sample to be analyzed is separated in time direction in the separation column of the liquid chromatograph, and the eluent containing the separated individual sample components is contacted with a plurality of taste sensors that reacts with substances such as potassium chloride (salty taste), tartaric acid (acid taste), sodium glutamate (umami), quinine (bitterness (+) ), iso- $\alpha$ acid (bitterness (- ) ), and tannic acid (astringency) . The response of the lipid membrane and the sample component can then be evaluated from the membrane potential or membrane resistance.

In this manner, when the taste- analyzing liquid chromatograph system is used to evaluate food or drink with five kinds of sensors for salty taste, umami, bitterness (+), bitterness (- ), and astringency, and detailed information such as five-dimensional taste information with regard to the relationship between the overall taste quality of the food or drink and the taste quality of each component contained in the food or drink can be obtained.

In the taste-analyzing liquid chromatograph system, the eluent continuously contacts with the taste sensors (on-flow). That is, because the analysis is on-flow, an evaluation can be performed over a time course from the time of the sensor reaction at which the test sample is firstly contacted with the taste sensor to the time of the sensor reaction of the taste sensor after the passage of the test sample. That is, time-dependent taste evaluation data can be obtained from each taste sensor.

The taste-analyzing liquid chromatograph system can also be used to obtain taste evaluation data for the sensory stimulus components, differently for each sensory stimulus component.

It should be noted that the sensory stimulus component does not mean the taste itself, as described above. However, for convenience, the measurement data obtained in the taste-analyzing liquid chromatograph system are referred to as "taste evaluation data".

According to the present invention, the taste evaluation data of a sensory stimulus component obtained by using the taste- analyzing liquid chromatograph system is used as a novel index for specifying the persistence of the sensory stimulus intensity of the sensory stimulus component. Evaluation of the persistency of the sensory stimulus intensity is made possible by determining the continuous (time- course) changes in the intensity of the sensory stimulus component with multi- dimensional taste evaluation data corresponding to the number of taste sensors.

Further, according to the present invention, the duration of the sensory stimulus intensity can be evaluated by making use of the time- course taste evaluation data of the intensity of the sensor reaction of the taste sensor, specifically the taste evaluation data of the sensor reaction of the taste sensor during and after the passage of the test sample.

<Test Component>

The test sample (test component) that can be used to specify a substance in the present invention is not particularly limited, as long as taste evaluation data can be obtained in the taste-analyzing liquid chromatograph system. For example, when the taste sensor in the taste-analyzing liquid chromatograph system is one that works under the principle of the change in the inherent membrane potential in response to the chemical reaction or adsorption reaction with the taste substances responsible for sweetness, salty taste, and the like in the lipid bilayer membrane present on the surface of the tongue of a living body, a wide range of test components that can provide taste information by reacting with the lipid bilayer membrane as in the food or drink can be used. Such a lipid bilayer membrane includes phosphoric acid group, amino group, ammonium group, hydroxyl group, carboxyl group and hydrocarbon group, and the lipid bilayer membrane generates a membrane potential or a membrane resistance. It is therefore preferable that the test component be one that can be prepared into a liquid form that allows for measurement of such a membrane potential or membrane resistance.

The test component used in the present invention is not particularly limited, as long as it can be used to evaluate the intensity of sensory stimulus. Examples thereof include cool sense stimulus components, warm sense stimulus components, pungent (pain) stimulus components, and astringent stimulus components and the like.

Examples of the cool sense stimulus components include:

compounds such as menthol, menthone, camphor, pulegol, isopulegol, cineole, cubebol, menthyl acetate, pulegyl acetate, isopulegyl acetate, menthyl salicylate, pulegyl salicylate, isopulegyl salicylate, 3- (1- menthoxy) propane- 1, 2- diol, 2- methyl- 3- (1- menthoxy) propane- 1, 2- diol, 2- (1- menthoxy) ethan- 1- ol, 3- (1- menthoxy) propan- 1- ol, 4- (1- menthoxy) butan- 1- ol, menthyl 3- hydroxybutyrate, menthyl glyoxylate, p- menthane- 3, 8- diol, 1- (2- hydroxy- 4- methylcyclohexyl) ethanone, menthyl lactate, menthone glycerin ketal, menthyl- 2- pyrrolidone- 5- carboxylate, monomenthyl succinate, alkali metal salts of monomenthyl succinate, alkali- earth metal salts of monomenthyl succinate, monomenthyl glutarate, alkali metal salts of monomenthyl glutarate, alkali- earth metal salts of monomenthyl glutarate, N- [[5- methyl- 2- (1- methylethyl) cyclohexyl] carbonyl] glycine, p- menthane- 3- carboxylic acid glycerol ester, menthol propylene glycol carbonate, menthol ethylene glycol carbonate, p- menthane- 2, 3- diol, 2- isopropyl- N, 2, 3- trimethyl butaneamide, N- ethyl- p- menthane- 3- carboxamide, 3- (p- menthane- 3- carboxamide) ethyl acetate, N- (4- methoxyphenyl)- p- menthane carboxamide, N- ethyl- 2, 2- diisopropyl butaneamide, N- cyclopropyl- p- menthane carboxamide, N- (4- cyanomethylphenyl)- p- menthane carboxamide, N- (2- pyridin- 2- yl)- 3- p- menthane carboxamide, N- (2- hydroxyethyl)- 2- isopropyl- 2, 3- dimethylbutaneamide, N- (1, 1- dimethyl- 2- hydroxyethyl)- 2, 2- diethylbutaneamide, cyclopropanecarboxylic acid (2- isopropyl- 5- methylcyclohexyl) amide, N- ethyl 2, 2- diisopropyl butaneamide, N- [4- (2- amino- 2- oxoethyl) phenyl]- p- menthane carboxamide, 2- [(2- p- menthoxy) ethoxy] ethanol, 2, 6- diethyl- 5- isopropyl- 2- methyltetrahydropyran, and trans- 4- tert- butylcyclohexanol, and racemates of these compounds and optically active forms of these compounds;
sugar alcohols such as xylitol, erythritol, dextrose, and sorbitol;
natural products such as Japanese peppermint oil, peppermint oil, spearmint oil, and eucalyptus oil; and
compounds described in JP- A- 2001- 294546, JP- A- 2005- 343915, JP- A- 2007- 002005, JP- A- 2009- 263664, JP- A- 2010- 254621, JP- A- 2010- 254622, JP- A- 2011- 079953, US 4136163, US 4150052, US 4178459, US 4190643, US 4193936, US 4226988, US 4230688, US 4032661, US 4153679, US 4296255, US 4459425, US 5009893, US 5266592 A, US 5698181 A, US 5725865 A, US 5843466 A, US 6231900 B1, US 6277385 B1, US 6280762 B1, US 6306429 B1, US 6432441 B1, US 6455080 B1, US 6627233 B1, US 7078066 B2, US 6783783 B2, US 6884906 B2, US 7030273 B1, US 7090832 B2, US 2004/0175489 A1, US 2004/0191402 A1, US 2005/0019445 A1, US 2005/0222256 A1, US 2005/0265930 A1, US 2006/015819 A1, US 2006/0249167 A1, EP 1689256 A1, WO2005/082154, WO2005/099473, WO2006/058600, WO2006/092076, and WO2006/125334.

Examples of the warm sense stimulus components include:

compounds such as vanillyl methyl ether, vanillyl ethyl ether, vanillyl propyl ether, vanillyl isopropyl ether, vanillyl butyl ether, vanillyl amyl ether, vanillyl isoamyl ether, vanillyl hexyl ether, isovanillyl methyl ether, isovanillyl ethyl ether, isovanillyl propyl ether, isovanillyl isopropyl ether, isovanillyl butyl ether, isovanillyl amyl ether, isovanillyl isoamyl ether, isovanillyl hexyl ether, ethylvanillyl methyl ether, ethylvanillyl ethyl ether, ethylvanillyl propyl ether, ethylvanillyl isopropyl ether, ethylvanillyl butyl ether, ethylvanillyl amyl ether, ethylvanillyl isoamyl ether, ethylvanillyl hexyl ether, vanillin propylene glycolacetal, isovanillin propylene glycolacetal, ethylvanillin propylene glycolacetal, vanillyl butyl ether acetic acid ester, isovanillyl butyl ether acetic acid ester, ethylvanillyl butyl ether acetic acid ester, 4- (1- menthoxymethyl)- 2- (3'- methoxy- 4'- hydroxyphenyl)- 1, 3- dioxolan, 4- (1- menthoxymethyl)- 2- (3'- hydroxy- 4'- methoxyphenyl)- 1, 3- dioxolan, 4- (1- menthoxymethyl)- 2- (3'- ethoxy- 4'- hydroxyphenyl)- 1, 3- dioxolan, capsaicin, dihydrocapsaicin, nordihydrocapsaicin, homodihydrocapsaicin, homocapsaicin, biscapsanthin, trishomocapsanthin, nornorcapsanthin, norcapsanthin, capsaicinol, vanillyl caprylamide (octylic acid vanillylamide), pelargonic acid vanillylamide (nonylic acid vanillylamide), vanillyl caproamide (decylic acid vanillyl amide), vanillyl undecamide (undecylic acid vanillyl amide), N- trans- feruloyltyramine, N- 5- (4- hydroxy- 3- methoxyphenyl)- 2E, 4E- pentadienoylpiperidine, N- trans- feruloylpiperidine, N- 5- (4- hydroxy- 3- methoxyphenyl)- 2E- pentenoylpiperidine, N- 5- (4- hydroxyphenyl)- 2E, 4E- pentadienoylpiperidine, piperine, isopiperine, chavicine, isochavicine, piperamine, piperettine, piperolein B, retrofractamide A, pipercide, guinensine, piperiline, piperamide C5: 1 (2E), piperamide C7: 1 (6E), piperamide C7: 2 (2E, 6E), piperamide C9: 1 (8E), piperamide C9: 2 (2E, 8E), piperamide C9: 3 (2E, 4E, 8E), fagaramide, sanshool- I, sanshool- II, hydroxysanshool, sanshoamide, gingerol, shogaol, zingerone, methylgingerol, paradol, spilanthol, chavicine, polygodial (tadeonal), isopolygodial, and dihydropolygodial, and racemates of these compounds and optically active forms of these compounds;
natural products such as capsicum oil, capsicum oleoresin, ginger oleoresin, jambu oleoresin (Spilanthes oleracea extract), Zanthoxylum piperitum extract, sanshoamide, black pepper extract, white pepper extract, and polygonum extract; and
compounds described in JP- A- 8- 225564, JP- A- 2007- 015953, JP- T- 2007- 510634 (the term "JP- T" as used herein means a published Japanese translation of a PCT patent application), JP- T- 2008- 505868, W02007/013811, WO2003/106404, EP 1323356 A2, DE 10351422 A1, US 2005/0181022 A1, and US 2008/0038386 A1.

<Taste- Analyzing Liquid Chromatograph System>

The taste- analyzing liquid chromatograph system used in the present invention is not particularly limited, and, for example, the system described in JP- A- 2007- 327801 may be used.
The liquid chromatograph used may be a commercially available liquid chromatograph, and, for example, a liquid chromatograph available from Shimadzu Corporation may preferably be used. The taste sensors used may be commercially available taste sensors, or taste sensors modified for the taste- analyzing liquid chromatograph system. For example, the taste sensors available from Intelligent Sensor Technology, Inc. may preferably be used.
The taste-analyzing liquid chromatograph system used in the present invention is described below with reference to the accompanying drawings.

[First Taste- Analyzing Liquid Chromatograph System]

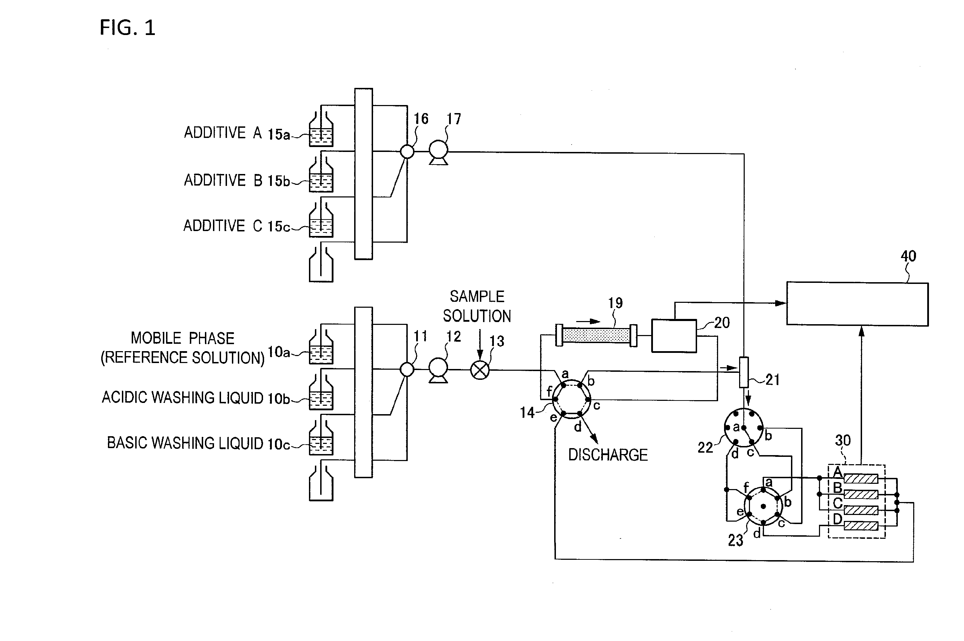

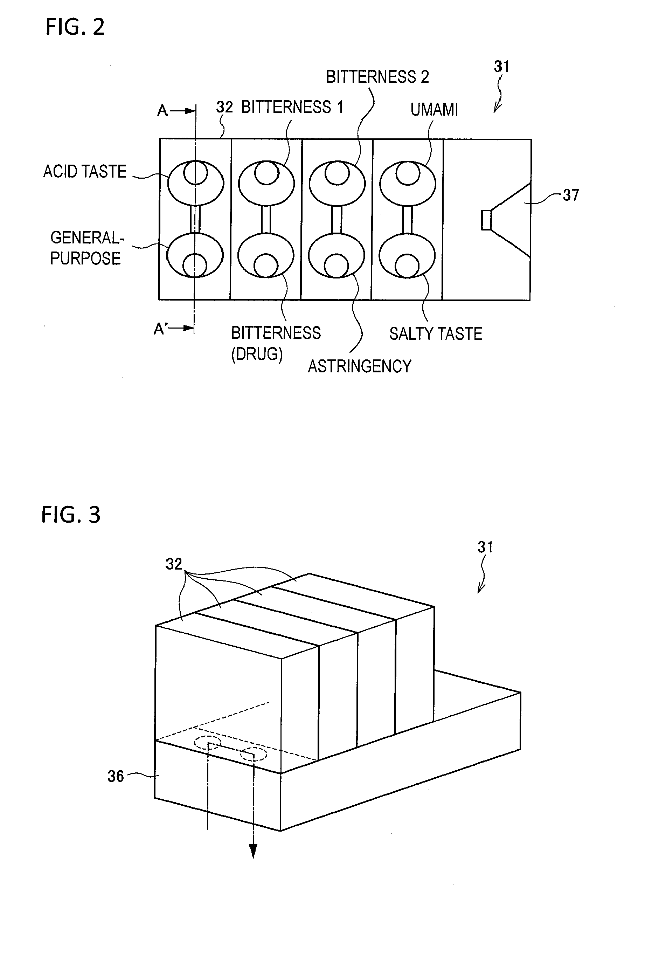

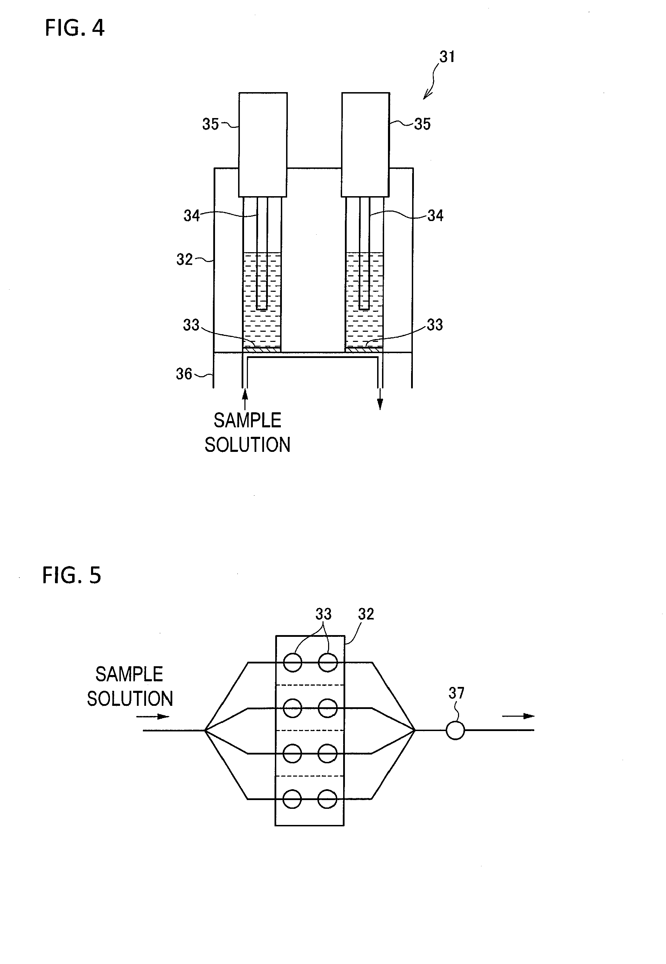

FIG. 1 is a block diagram of a relevant portion of a first taste- analyzing liquid chromatograph system primarily illustrating the channel configuration. FIG. 2 is a schematic top view of a flow sensor of a taste detecting part. FIG. 3 is a schematic perspective view of the flow sensor of the taste detecting part. FIG. 4 is a cross sectional view taken at line A- A' of FIG. 2. FIG. 5 is a channel block diagram of a flow sensor of the taste detecting part.
In the first taste-analyzing liquid chromatograph system (hereinafter, also referred to as "first system"), as depicted in FIG. 1, the mobile phase (reference solution), the acidic washing liquid, and the basic washing liquid stored in vessels 10a, 10b, and 10c, respectively, are selected by a first switch valve 11, and are carried by a first flow pump 12 to a port a of a first 6-port 2-position valve 14 via an autosampler 13. In vessels 15a, 15b, and 15c, different additives A, B, and C are stored, respectively, and when a second flow pump 17 is activated, the additive as selected by a second switch valve 16 is carried to the inlet of a mixer 21.
In the first 6-port 2-position valve 14 and a second 6-port 2-position valve 23 to be described later, the adjacent two ports are connected and the states indicated by solid line and dotted line, as shown in FIG. 1 are switched. Between the ports f and c of the first 6-port 2-position valve 14, a size-exclusion chromatography column 19 and detectors (including an ultraviolet-visible detector (UV-VIS), a fluorescence detector (RF), a refractive index detector (RID), an electric conductivity detector (CDD), an evaporative light scattering detector (ELSD), and a mass spectrometry detector (MS)) 20 are provided. The port d is connected to the outlet. The port b is connected to another inlet of the mixer 21, and the outlet of the mixer 21 is connected to the center port a of a first 7-port 6-position valve 22. The first 7-port 6-position valve 22 is configured so that any one of the six ports (only three ports, b, c, and d, are in use in FIG. 1) surrounding the single center port a is selectively connected to the center port a.
The ports c and b of the first 7-port 6-position valve 22 are connected to the ports b and c, respectively, of the second 6-port 2-position valve 23. The port d of the first 7-port 6-position valve 22 is connected to the ports e and f of the second 6-port 2-position valve 23. The port a of the second 6-port 2-position valve 23 is connected to the inlets of taste sensors A, B, and C of a taste detecting part 30, and the port d of the second 6-port 2-position valve 23 is connected to the inlet of a taste sensor D. The outlets of the taste sensors A to D are connected to the port e of the first 6-port 2-position valve 14. The taste sensors A to D each correspond to a single sensor block 32, as will be described later. The taste sensors A, B, and C are sensors that show a negative (-) behavior, whereas the taste sensor D is a sensor that shows a positive (+) behavior.
The detection signal from the detector 20 and the detection signal from the taste detecting part 30 are input to a signal processing part 40. The signal processing part 40 is configured to include a CPU (Central Processing Unit), or a designated DSP (Digital Signal Processor), along with other components, and stores therein programs for processing the detection signals to obtain information described later. A control unit for controlling the valves 14, 22, and 23, the pumps 12 and 17, and the like is also provided, though not illustrated in the figure.

The taste detecting part 30 is a flow cell detector, and includes a flow sensor 31.

As illustrated in FIGs. 2 to 5, the flow sensor 31 includes sensor blocks 32 each fabricated by attaching lipid/polymer membranes 33 to the apertures on the bottom surfaces of two cylindrical electrolytic solution retention vessels with a vinyl chloride resin and tetrahydrofuran (THF). The flow sensor 31 also includes silver (Ag) electrodes 34 held to plugs 35 and housed inside each sensor block 32, a channel block 36 having formed therein an internal channel used to guide a sample solution to the lipid /polymer membranes 33, and a comparison electrode 37.

For measurement, a saturated silver chloride (AgCl) solution (electrolytic solution) is charged into the sensor block 32 so as to immerse the lower portion of the electrodes 34. A potential response change occurs when a sample solution flown into the channel in the channel block 36 contacts with the lipid/polymer membranes 33. The change in potential response is detected by the electrodes 34 via the electrolytic solution, and the detection signal is sent to the signal processing part 40 as described above. Two kinds of the lipid/polymer membranes 33 are attached to each sensor block 32, and each of them responds to different sensory stimulus components. Here, it is required that the two lipid/polymer membranes 33 attached to the sensor block 32 is not affected by the component dissolved out from the membrane. The flow sensor 31 has four sensor blocks 32, each of which has two lipid/polymer membranes 33, enabling an analysis of eight kinds of sensory stimulus components in total. In the present invention, as illustrated in FIG. 2, sensors that respond to an acid taste, umami, astringency, and a salty taste, and to three kinds of bitterness, and an unspecified, general-purpose sensor are used for analysis.

The incoming sample solution (mobile phase) through the inlet is branched into four channels, and discharge through the common comparison electrode 37 as a single flow after contacting with the lipid/polymer membranes 33 of each sensor block 32. Because the sample solution channel corresponding to each sensor block 32 is joined on the inlet and outlet sides, when the supply of the mobile phase is stopped, the sample solution containing a component dissolved out from the membrane of one sensor block 32 may be flown into another sensor block by natural diffusion, and the membrane in the sensor block may be contaminated. As a countermeasure, the mobile phase used to introduce a sample is supplied either continuously or at least without interrupting the flow, or check valves are provided on the inlet and outlet sides of the channel of each sensor block 32 to prevent contamination between the sensor membranes even if the supply of the mobile phase is stopped.

The following describes the operation of the first taste-analyzing liquid chromatograph system configured as above. For analysis, the first 6-port 2-position valve 14 and the second 6-port 2-position valve 23 are set to the states respectively indicated by the dotted lines shown in FIG. 1, with the port a and the port d of the first 7-port 6-position valve 22 being connected to each other. The mobile phase selected by the first switch valve 11 is then carried to the autosampler 13 by the suction with the first flow pump 12. Here, for example, a 10 mM KCl or 10 mM KCl + 0.3 mL tartaric acid aqueous solution may be used as the mobile phase, and the flow rate may be set to about 0.1 to 1 mL/min.

When the test solution (test component) is injected into the mobile phase at a predetermined timing with the autosampler 13, the test component in the mobile phase is carried to the mixer 21 via the first 6-port 2-position valve 14. When the second flow pump 17 is not activated, the test component passes through the mixer 21, and is carried to the taste detecting part 30 via the ports a and d of the first 7-port 6-position valve 22 and the ports e, f, and parts a, and d of the second 6-port 2-position valve 23. The taste sensors A to D each produce a detection signal as the test component passes through the taste detecting part 30, and the detection signals are sent to the signal processing part 40.

The test component through the taste sensors A to D of the taste detecting part 30 joins and returns to the port e of the first 6-port 2-position valve 14, and is carried to the column 19 through the port f. The test component is separated into individual components depending on polarity during the passage through the column 19, and the separated components are eluted out of the column 19 with a time lag. The eluent is introduced into the detector 20, and each component in the eluent is sequentially detected over time. That is, the detector sequentially produces a signal according to the type of each test component contained in the eluent, and the signals are sent to the signal processing part 40.

The first 6-port 2-position valve 14 is switched from the connected state indicated by dotted line in FIG. 1 to the connected state indicated by solid line in FIG. 1 immediately after the test component is introduced into the column 19. The eluent through the detector 20 is thus carried to the mixer 21 again through the ports c and b of the first 6-port 2-position valve 14. In the manner described above, when the second flow pump 17 is inactivated, the eluent passes through the mixer 21, and is introduced again into the taste detecting part 30. Here, because the test component injected by the autosampler 13 is separated by the column 19, a plurality of sample components is introduced into the taste detecting part 30 one after another over a time course, and the taste sensors A to D produce detection signals from these sample components. The eluent through the taste detecting part 30 is returned to the port e of the first 6-port 2-position valve 14, and is discharged through the port d.

Based on the above-described flow of the test component and flow of the eluent after the separation of the test component into individual components, the detection signal produced by the taste detecting part 30 from the unseparated test component, the detection signals produced by the taste detecting part 30 from the eluent containing the individual components separated time-dependently, and the detection signals produced by the detector 20 from the eluent containing the individual components separated time-dependently are sent to the signal processing part 40. The signal processing part 40 then performs the predetermined arithmetic processes for each of the detection signals to determine information concerning the component being analyzed.

Specifically, the detection signal produced by the taste detecting part 30 from the unseparated test component is processed by a principal component analysis, a multiple regression analysis, or other appropriate multivariable analyses to determine information concerning the sensory stimulus intensity of the component as a whole. The detection signals produced by the detector 20 from the eluent containing the individual components separated time- dependently are used to create a chromatogram of varying wavelengths, and the peaks appearing in the chromatogram are detected for qualitative analysis to identify each component and estimate the content of each component. Further, the detection signals produced by the taste detecting part 30 upon the introduction of the each identified component into the taste detecting part 30 are extracted, and this is processed by a principal component analysis, a multiple regression analysis, or other appropriate multivariable analyses to determine information concerning the sensory stimulus intensity of each component contained in the test component. These results can then be used to analyze, for example, the relationship between the type, amount, and taste quality of each component contained in the test component being analyzed, and the sensory stimulus intensity of the whole test component as a test component mixture.

Generally, the mobile phase is kept on flowing after the introduction of the test component into the taste detecting part 30, and thus, the test component adhered to the lipid/ polymer membranes of each taste sensor is washed by the mobile phase, and the detection signal returns to the initial level. However, there are cases where the detection signal does not easily return to the initial level when the test component has a high concentration and remains in large amounts in the lipid/ polymer membranes. According to the foregoing configuration, this can be dealt with by washing the lipid/ polymer membranes of the each taste sensor with a washing liquid. For washing, an acidic washing liquid or a basic washing liquid are used depending on the property of the lipid/ polymer membranes. That is, an acidic washing liquid such as 30% ethanol + 100 mM HCl may be used for the lipid/ polymer membranes that show a negative behavior, and a basic washing liquid such as 30% ethanol + 100 mM KCl + 10 mM KOH for the lipid/ polymer membranes that show a positive behavior.

The channel configuration described above is adapted to use a combination of valves to avoid mixing of the washing liquids of incompatible properties. That is, for the washing of the taste sensors A, B, and C that show a negative behavior, the first switch valve 11 is used to select the acidic washing liquid, and the first 7-port 6-position valve 22 is set to the connected state shown in FIG. 1 (that is, the port a and the port c are connected to each other), whereas the second 6-port 2-position valve 23 is set to the connected state as indicated by solid line in FIG. 1. The acidic washing liquid carried from the first flow pump 12 is then introduced into the taste detecting part 30 to wash the surfaces of the membranes of each taste sensor. After thorough washing, the first  switch valve 11 is switched to select the mobile phase and the washing liquid in the channel is replaced with the mobile phase.

On the other hand, for the washing of the taste sensor D that shows a positive behavior, the first switch valve 11 is used to select the basic washing liquid, and the port a and the port b of the first 7-port 6-position valve 22 are connected to each other, whereas the second 6-port 2-position valve 23 is set to the connected state as indicated by solid line in FIG. 1. The basic washing liquid carried from the first flow pump 12 is then introduced into the taste detecting part 30 to wash the surfaces of the membranes of each taste sensor. After thorough washing, the first switch valve 11 is switched to select the mobile phase and the washing liquid in the channel is replaced with the mobile phase. With the port a and the port d of the first 7-port 6-position valve 22 connected to each other and the second 6-port 2-position valve 23 set to the connected state as indicated by dotted line in FIG. 1, the mobile phase can be flown into all of the taste sensors A to D to entirely replace the washing liquid with the mobile phase.

In the foregoing description, the taste detecting part 30 is used to determine the sensory stimulus intensity of the test component as a whole and the sensory stimulus intensity of each test component. However, separate taste detecting parts may be provided. It should be noted, however, that because the detection properties of taste sensors generally have relatively large individual differences, more accurate results can be obtained by using detection signals from the same taste sensor, if the determination of the sensory stimulus intensity of the same test component as a whole are to be associated with the determination of the sensory stimulus intensity of each test component.


[Second Taste- Analyzing Liquid Chromatograph System]


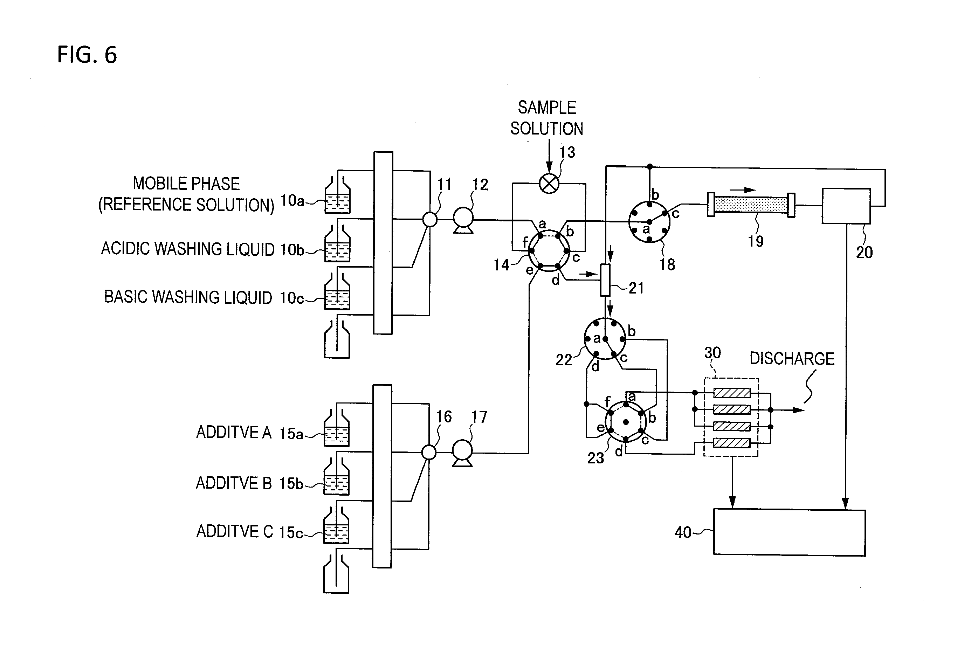

FIG. 6 is a block diagram of a relevant portion of a second taste- analyzing liquid chromatograph system primarily illustrating the channel configuration. In FIG. 6 and FIG. 1, same and/or corresponding constituting elements are appended with the same reference numerals.

Unlike the foregoing first system, the second taste-analyzing liquid chromatograph system (hereinafter, also referred to as "second system") is configured such that the test component that has passed through the taste detecting part 30 is directly discharged, and is unable to simultaneously determine the sensory stimulus intensity of the test component and the sensory stimulus intensity of each separated test component at one time. Instead, a second 7-port 6-position valve 18 is switched, and the test component unseparated by the connection of port a and port b, and the eluent containing the test component separated through the column 19 by the connection of port a and port c can be selectively carried to the taste detecting part 30. In this manner, the same analysis performed in the first system can be performed by performing the analysis twice.

Note that the first and second systems are examples of the present invention, and any change, modification, and addition appropriately made within the scope of the present invention fall within the system used in the present invention.

For example, instead of the foregoing systems in which the test components separated by a separation column or the like are directly introduced into the taste detecting part, each test component separated by, for example, a separation column may be fractionated into a different vessel with a fraction collector, and the eluent containing the fractioned separate test component may be sequentially introduced into the taste detecting part to obtain a detection signal for each separated test component in the taste sensor.

In the taste-analyzing liquid chromatograph system used in the present invention, the test component to be analyzed is separated in time direction, for example, with a LC (Liquid chromatography) separation column, and the eluent containing the separated individual test components is introduced into the taste detecting part. In the taste detecting part, the eluent introduced into the taste detecting part contacts with a plurality of taste sensors, and the taste sensors output detection signals according to the test components contained in the eluent. The taste sensors produce different detection signals as the different test components are introduced over a time course. The signal processing part then computes information, for example, such as the intensity of lingering perception, concerning the sensory stimulus intensity corresponding to each test component, using the time-dependent detection signals. This makes it possible to specifically obtain the sensory stimulus intensity of each separated test component contained in the test component, instead of the sensory stimulus intensity of the test component as a whole.

For example, the separated test components which has passed through, for example, the flow cell taste detecting part may be introduced into a detector such as a ultraviolet-visible spectrophotometer or a mass spectrometer, or a liquid sample with the separated components which has passed through a detector such as a flow cell ultraviolet-visible spectrophotometer may be introduced into the taste detecting part. Each separated test component may then be qualified or quantified using the detection signals obtained from the detector, and the type and the content of each separated test component contained in the test component may be correlated with its sensory stimulus intensity for display or output. This makes it possible to individually and clearly obtain information concerning each separated test component contained in the test component, and information concerning the sensory stimulus (for example, lingering perception) of the separated test component.

The taste-analyzing liquid chromatograph system used in the present invention may be configured to include another taste detecting part (second taste detecting part) that includes a plurality of taste sensors of different response characteristics, in order to detect the sensory stimulus intensity of the unseparated test component.

In this case, the second taste detecting part may be separately provided from the original taste detecting part. However, from the standpoint of the detection variation and the cost attributed to the individual differences of the taste sensors, it is more preferable to provide these taste detecting parts as a single common detector, and to provide channel switching means that selectively supplies the test component or an eluent containing the separated components to the detector.

With this configuration, the sensory stimulus intensity of the test component as a whole, and the sensory stimulus intensity of each separated test component contained in the sample can be obtained by a single analysis, and it is possible to efficiently and easily obtain information concerning the degree of the contribution of the sensory stimulus intensity of each separated test component to the sensory stimulus intensity of the test component as a whole, and the relationship between the sensory stimulus intensity of the test component as a whole and the sensory stimulus intensity of each separated test component.

In the present invention, the taste evaluation data obtained by using the taste-analyzing liquid chromatograph system is used not as taste information, but as an index of the sensory stimulus intensity of the test component, particularly an index of lingering perception intensity. The taste evaluation data may be obtained in a multidimensional fashion according to the number of taste sensors used.
The following specifically describes an evaluation method.

(i) Specifying Test Component

In the taste-analyzing liquid chromatograph system, the taste evaluation data can be obtained according to the number of taste sensors, and accordingly the test component can be specified, for example, from the taste evaluation data of n dimensions with the use of n-kinds of taste sensors.

Examples of such taste sensors include a salty taste sensor responsive to the salty taste of potassium chloride, an acid taste sensor responsive to the acid taste of tartaric acid, an umami sensor responsive to the umami of glutamic acid, a bitterness (+) sensor responsive to the bitterness of quinine, a bitterness (-) sensor responsive to the bitterness of iso-$\alpha$ acid, an astringency sensor responsive to the astringency of tannic acid, and the like.

In the taste-analyzing liquid chromatograph system, the taste evaluation data can be obtained as the intensity of sensor reaction (the absolute value of sensor reaction) through the processing of a detection signal from each taste sensor. Further, in the taste-analyzing liquid chromatograph system, because the analysis is on-flow, the sensor reaction can be evaluated over a time course from the time at which the analyzed test sample is firstly contacted with the taste sensor to the time at which the test sample has passed through the taste sensor. That is, the intensity of the sensor reaction at each taste sensor (the absolute value of sensor reaction) can be obtained as taste evaluation data in a time-dependent fashion.

Further, in the taste- analyzing liquid chromatograph system, the intensity of the sensor reaction from the time at which the test sample is firstly contacted with the taste sensor to time at which the test sample has passed through the taste sensor can be used as an index for the evaluation of the persistence (lingering perception) of the sensory stimulus after a food is swallowed.

The sensory stimulus intensity (the intensity of lingering perception) can be evaluated according to the proportion of the magnitude of the sensor reaction intensity with respect to its maximum value (the maximum value of the absolute value of the sensor reaction) as measured after a certain elapsed time period from the time at which the sensor reaction intensity has the maximum value.

That is, in the taste-analyzing liquid chromatograph system, the absolute value of the sensor reaction of the taste sensor in the continuous (on-flow) stable state of the eluent (mobile phase) is taken as zero by initialization. Then, the test component prepared beforehand in the autosampler is injected therefrom at a predetermined timing, and is carried to the taste detecting part with the mobile phase. The intensity of the sensor reaction (the absolute value of the sensor reaction) at each taste sensor from the time at which the test component is firstly contacted with the taste sensor to the time at which the test component has passed through the taste sensor can then be measured upon the test component contacting with the taste sensor.

Here, the evaluation value based on the sensor reaction intensity of the sensor stimulus for the test component is represented by the following equation (1) .

$$\text{Evaluation value} = \sum_{n=1}^{k} \frac{P_n(T_1)}{P_n(T_{\max})} C_n \qquad (1)$$

In the equation, k is the number of the taste sensors used for evaluation, n means the nth sensor, $P_n(T)$ is the absolute value of the sensor reaction at retention time T, $T_{\max}$ is the time at which the absolute value of the sensor reaction has the maximum value, $T_1$ is the certain elapsed time period from the time at which the absolute value of the sensor reaction has the maximum value ($T_1 \geq T_{\max}$), and $C_n$ is a coefficient representing the degree of the contribution of the nth sensor reaction to the sensory intensity evaluation.

The sensory stimulus intensity can be evaluated from the cumulative value of the proportion of the magnitude of the sensor reaction intensity with respect to its maximum value (the maximum value of the absolute value of the sensor reaction) as measured after a certain elapsed time period from the time at which the sensor reaction intensity has the maximum value.

The evaluation value based on the proportion of the magnitude of the sensor reaction intensity of the sensory stimulus for the test component can be represented by the following equation (2).

$$\text{Evaluation value} = \sum_{n=1}^{k} \left( \sum_{t=T_{\max}}^{T_1} \frac{P_n(t)}{P_n(T_{\max})} C_n \right) \qquad (2)$$

In the equation k is the number of the taste sensors used for evaluation, n means the nth sensor, $P_n(t)$ is the absolute value of the sensor reaction at retention time t, $T_{\max}$ is the time at which the absolute value of the sensor reaction has the maximum value, $T_1$ is the certain elapsed time from the time at which the absolute value of the sensor reaction has the maximum value ($T_1 \geq T_{\max}$), and $C_n$ is a coefficient representing the degree of the contribution of the nth sensor reaction to the sensory intensity evaluation.

Irrespective of which equation is used for the evaluation, the foregoing method can be performed for the unknown test component, and the evaluation value can be used to evaluate the sensory stimulus intensity of the test component.

(ii) Detection of Differences between Test Components

In the sensory stimulus measurement of a test component, the output of each taste sensor greatly differs for different sensory stimulus components such as the combination of a cool sense stimulus component and a warm sense stimulus component. For example, the taste sensor produces similar outputs for similar test components such as two or more kinds of cool sense stimulus components. The difference between similar cool sense stimulus components can thus be evaluated by selecting a taste sensor that is more capable of presenting a difference between two or more kinds of cool sense stimulus components, without using the taste evaluation data of all the taste sensors.

The taste evaluation data that can be used to evaluate the difference between similar test components can be selected by acquiring taste evaluation data for the reference component used as the reference of the sensory stimulus to be evaluated, and selecting the taste evaluation data obtained from the taste sensor capable of evaluating the difference between the test components. For example, for the evaluation of cool sense stimulus components, 1-menthol may be used as the reference component of the sensory stimulus.

The method used to select the taste evaluation data obtained from the taste sensor for the evaluation of the intensity of the sensory stimulus component is not particularly limited, and any method may be used. In one exemplary method, the maximum value of the absolute value of the sensor reaction is detected in each taste sensor, and the taste evaluation data of two or more kinds of taste sensors having the largest and the subsequent maximum values of the absolute values are selected.

(iii) Grouping of Test Components

In the present invention, the characteristic of the sensory stimulus component can be expressed in a numerical value by using the taste evaluation data of the test component as an index, and the test components can be grouped according to the taste evaluation data. That is, the present invention provides a novel grouping scheme of test component based on a novel index. When the grouping based on the novel index using the taste evaluation data is the same as or close to the common grouping, the taste evaluation data may be acquired for a new or unknown test component to easily evaluate whether the test component belongs to which group.

Such grouping may be performed for all the taste evaluation data of the measured test components. It is also possible to create a two-dimensional scatter diagram from the data of a specific taste sensor that is more capable of presenting a difference between the test components, and to group the test components by visually determining the scattering of the data. Such a taste sensor can be selected by using the method described in the above section (ii) Detection of Differences between Test Components.

In the present invention, the sensory stimulus components may be estimated as being different when the taste evaluation data are different. For this identity determination, the taste evaluation data from a taste sensor that is more capable of evaluating the intensity between very similar sensory stimulus components may effectively be used.

As described above, in the present invention, the taste evaluation data obtained for the test component from the taste-analyzing liquid chromatograph system is used as an index, and changes in the taste evaluation data of the test component are evaluated to evaluate the intensity of the sensory stimulus of the test component, particularly the intensity of lingering perception.

Further, the intensity of the lingering perception of the sensory stimulus component can be evaluated by using the time-dependent taste evaluation data of the intensity of the sensor reaction in the taste sensor, specifically the taste evaluation data of the sensor reaction in the taste sensor during and after the passage of the test component.

That is, in the taste-analyzing liquid chromatograph system, the test component is measured for a detection signal by each taste sensor, and the detection signal is processed by the signal processing part to obtain taste evaluation data as an absolute value.

When the persistence (lingering perception) of the sensory stimulus that remains after the sensory stimulus component is swallowed is evaluated in the taste-analyzing liquid chromatograph system, the taste evaluation data may be acquired for the test component as with the case of the food or drink, and the taste evaluation data may be used as information specific to the test component.

The taste evaluation data of lingering perception can be acquired by measuring the continuous (time-dependent) absolute value of the sensor reaction in the taste sensor from the time at which the test component is firstly contacted with the taste sensor to the time at which the test component has passed through the taste sensor, in the taste-analyzing liquid chromatograph system.

(iv) Evaluation Method of Test Component

The following describes methods for evaluating the cool intensity of a cool sense stimulus component, and the intensity of the lingering perception of the cool intensity with the taste-analyzing liquid chromatograph system.

The taste evaluation data for a cool sense stimulus component can be associated with the actual intensity of the lingering perception by using CA20 (1-menthyl 3-hydroxybutanoate) as the cool sense stimulus component, and 1-menthol, which is a representative cool sense stimulus component, as the reference component of the sensory stimulus.

First, the taste-analyzing liquid chromatograph system of the present invention is used to perform measurements and determine the absolute value $P(T_{max})$ of sensor reaction at time $T_{max}$ at which the absolute value $P(T)$ of the sensor reaction at retention time $T$ shows the maximum value.

Then, the absolute value $P(T_1)$ of sensor reaction after a certain elapsed time period $T_1$ from the time at which the absolute value of the sensor reaction has the maximum value is determined.

After determining the absolute value $P(T_{max})$ of sensor reaction at $T_{max}$, and the absolute value $P(T_1)$ of sensor reaction at $T_1$ for each sample, the ratio of the two absolute values (hereinafter, also referred to as "response ratio") represented by the equation (3) below is determined as the value that corresponds to the intensity of the lingering perception of each component.

$$\text{Response ratio } = \frac{P(T_1)}{P(T_{max})} \quad (3)$$

The following describes how the cool sense stimulus component, the response ratio, and the actual intensity of lingering perception are associated with one another.

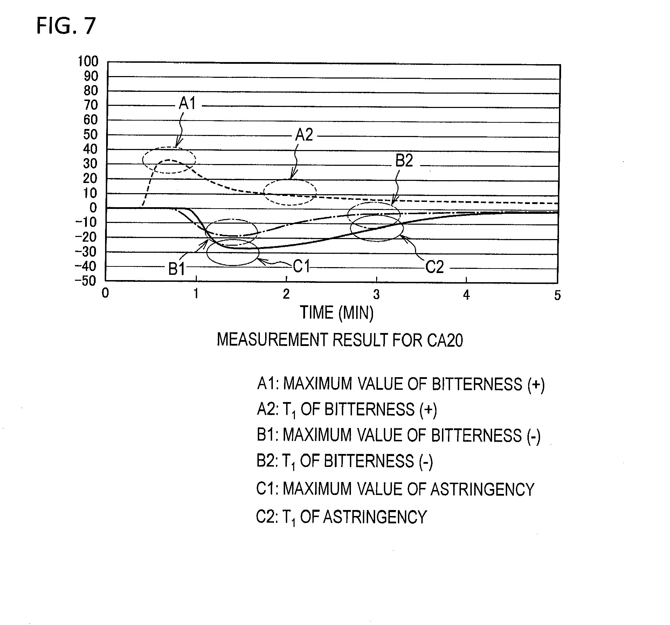

This will be described using the actual measurement results, as follows. FIG. 7 represents the absolute value of each sensor reaction obtained from the process performed for CA 20 (1-menthyl 3-hydroxybutanoate) with the taste-analyzing liquid chromatograph system. For the cool sense stimulus component, specific reactions are observed from three taste sensors responsive to bitterness (+), bitterness (-), and astringency. As clearly represented in FIG. 7, the absolute value of each sensor reaction increases as the intensity of the sensor reaction increases from the first contact with the taste sensor, and the sensor reaction produces the maximum value $P(T_{max})$ at time $T_{max}$ at which the absolute value of the sensor reaction becomes the maximum after about 1 min from the first contact. Note that the absolute values of the sensor reactions for bitterness (+), bitterness (-), and astringency take the maximum values at different times ($T_{max}$) because there is a time lag among the times at each of which the CA20 contacts with each sensor. The sensor membranes, specifically the lipid/polymer membranes, have different properties, and a membrane potential change from the steady state occurs when the corresponding taste component is adsorbed to the membrane surface. The membrane potential change is either a positive (+) response or a negative (-) response. In the present invention, the sensor reaction change from the steady state is observed by taking its absolute value to determine the intensity of the lingering perception of each component.

After $T_{max}$, the absolute value of sensor reaction decreases over time, and it is preferable that the intensity of the lingering perception of the sensory stimulus be evaluated by using $P(T_1)$ obtained at time $T_1$ at which the response ratio of the absolute value of sensor reaction for the reference component (1-menthol) to $P(T_{max})$ is about 0.5.

The response ratio has a correlation with the sensory evaluation, and can be said as representing a 1:1 relationship with the actual intensity of the lingering perception of the sensory stimulus. This correlative information can thus be used for the evaluation of a cool sense stimulus component of an unknown sensory stimulus lingering perception, without relying on sensory evaluation.

That is, the degree of contribution (parameter) by which the response ratio of each taste sensor (in the case of a cool sense stimulus component, the response ratio from each of the three sensors responsive to bitterness (+), bitterness (-), and astringency) is associated with the result of sensory evaluation is determined beforehand, and an evaluation value representing the lingering perception intensity of the sensory stimulus of the test component can be calculated by computation from the response ratio and degree of contribution of the test component.

For example, the sensory evaluation value for the reference component (1- menthol) can be represented by the following equation (4) .

$$\text{Evaluation value} \quad = \frac{P(T_1)}{P(T_{max})} C \qquad (4)$$

In the equation, $P(T_1)$ is the cool intensity after time $T_1$, $P(T_{max})$ is the maximum value of the cool intensity, and C is a coefficient indicative of the full score of the sensory evaluation value.

The evaluation value (m) of the lingering perception intensity of the reference component is then calculated from the equation (5) below, using the response ratio of each taste sensor obtained for the reference component (1-menthol), and the degree of contribution $C_m$.

$$\text{Evaluation value (m)} \quad = \frac{P_m(T_1)}{P_m(T_{max})} C_m \qquad (5)$$

In the equation, m means each taste sensor, $P_m(T_1)$ is the absolute value of the intensity value of the taste sensor reaction in the taste sensor m after time $T_1$, $P_m(T_{max})$ is the maximum value of the absolute value of the intensity value of the taste sensor reaction in the taste sensor m, and $C_m$ is a coefficient indicative of the degree of contribution of the taste sensor to the evaluation value of the taste sensor m.

The degree of contribution is specified for each taste sensor, and the evaluation value (m) of each taste sensor is determined.

The evaluation value as represented by the following equation (1) can then be determined by summing the evaluation value (m) of each taste sensor determined as above.

$$\text{Evaluation value} \quad = \sum_{n=1}^{k} \frac{P_n(T_1)}{P_n(T_{max})} C_n \qquad (1)$$

In the equation, k is the number of taste sensors used for evaluation, n means the nth sensor, $P_n(T)$ is the absolute value of the sensor reaction at retention time T, $T_{max}$ is the time at which the absolute value of the sensor reaction has the maximum value, $T_1$ is the certain elapsed time period from the time at which the absolute value of the sensor reaction has the maximum value ($T_1 \geq T_{max}$), and $C_n$ is a coefficient representing the degree of the contribution of the nth sensor reaction to the sensory intensity evaluation.

The following describes the evaluation of sensory stimulus intensity according to the cumulative value of the proportion of the magnitude of the sensor reaction intensity with respect to the maximum value of the sensor reaction as measured after a certain elapsed time period.

When the absolute value of the sensor reaction after an elapsed time t from the time at which the absolute value of the sensor reaction has the maximum value is P(t), the ratio of the two absolute values (response ratio) can be represented by the following equation (6).

$$\text{Response ratio} \quad = \frac{P(t)}{P(T_{max})} \qquad (6)$$

The sum of response ratios (T) obtained by summing the response ratios from the equation (6) over time t from the time $T_{max}$ at which the absolute value of the sensor reaction has the maximum value to the time $T_1$ which is a certain elapsed time period from the time at which the absolute value of the sensor reaction has the maximum value can be represented by the following equation (7).

$$\text{Sum of response ratios (T)} = \sum_{t=T_{\max}}^{T_1} \frac{P_x(t)}{P_x(T_{\max})} \qquad (7)$$

In the equation, x means each taste sensor, $P_x(t)$ is the absolute value of the reaction intensity value of the taste sensor x after time t, and $P_x(T_{\max})$ is the maximum value of the absolute value of the reaction intensity value of the taste sensor x.

The sensory evaluation value for, for example, the reference component (1- menthol) is represented by the following equation (8) .

$$\text{Evaluation value} = \sum_{t=T_{\max}}^{T_1} \frac{P(t)}{P(T_{\max})} C \qquad (8)$$

In the equation, P(t) is the cool intensity after time t, $P(T_{\max})$ is the maximum value of the cool intensity, and C is a coefficient indicative of the full score of the sensory evaluation value at time t.

The evaluation value (m) of the lingering perception intensity of the reference component is then determined from the equation (9) below, using the response ratio of each taste sensor obtained for the reference component (1-menthol), and the degree of contribution $C_m$.

$$\text{Evaluation value (m)} = \sum_{t=T_{\max}}^{T_1} \frac{P_m(t)}{P_m(T_{\max})} C_m \qquad (9)$$

In the equation, m means each taste sensor, $P_m(t)$ is the absolute value of the intensity value of the taste sensor reaction in the taste sensor m after time t, $P_m(T_{\max})$ is the maximum value of the absolute value of the intensity value of the taste sensor reaction in the taste sensor m, and $C_m$ is a coefficient indicative of the degree of contribution of the taste sensor to the evaluation value of the taste sensor m.

The degree of contribution is specified for each taste sensor, and the evaluation value (m) of each taste sensor is determined.

The evaluation value as represented by the following equation (2) can then be determined by summing the evaluation value (m) of each taste sensor determined as above.

$$\text{Evaluation value} = \sum_{n=1}^{k} \left( \sum_{t=T_{\max}}^{T_1} \frac{P_n(t)}{P_n(T_{\max})} C_n \right) \qquad (2)$$

In the equation, k is the number of taste sensors used for evaluation, n means the nth sensor, $P_n(t)$ is the absolute value of the sensor reaction at retention time t, $T_{\max}$ is the time at which the absolute value of the sensor reaction has the maximum value, $T_1$ is the certain elapsed time from the time at which the absolute value of the sensor reaction has the maximum value ($T_1 \geq T_{\max}$), and $C_n$ is a coefficient representing the degree of the contribution of the nth sensor reaction to the sensory intensity evaluation.

Note that the degree of contribution $C_n$ for the response ratio of the taste sensor used for evaluation may be deemed as having the same level of contribution, and the same value may be used to determine the evaluation value.

In either method, a test component of an unknown lingering perception of sensory intensity may be measured in the manner described above, and information such as the response ratio and the degree of contribution may be used to grasp the intensity of the lingering perception of the sensory intensity of the test component.

By determining the sensory intensity or the intensity of the lingering perception of sensory intensity in this manner, the sensory intensity or the intensity of the lingering perception of sensory intensity can be accurately grasped without performing a sensory evaluation for the test component. It is therefore possible to efficiently perform an evaluation with high reproducibility, without being influenced by factors such as the individual differences and the physical conditions of panelists.

The foregoing description has been given through the case where the sensory intensity of the cool sense stimulus component, and the intensity of the lingering perception of sensory intensity are evaluated by using taste sensors selectively responsive to quinine (bitterness (+)), iso-$\alpha$ acid (bitterness (-)), and tannic acid (astringency) tastes. However, the evaluation target is not limited to the cool sense stimulus component, and the sensory intensity and the lingering perception of sensory intensity can be evaluated also for other sensory stimulus components such as a warm sense stimulus component, by using taste evaluation data from the taste sensors selectively responsive to the sensory stimuli of the test components in the manner described above.

Examples

The present invention is described below in greater detail using examples. It should be noted, however, that the present invention is in no way limited by the following examples.

<Measurement Device>

In the examples, the following measurement devices were used for measurements.
Taste- analyzing liquid chromatograph system: The above- described second taste- analyzing liquid chromatograph system (Shimadzu Corporation)
Taste sensor: The sensor prepared by subjecting TASTE SENSOR SA402B (product name) available from Intelligent Sensor Technology, Inc., to size reduction (the sensor described in JP- A- 2007- 327801)

<Analysis Conditions>

Eluent: a KCl (2.24 g/L) and tartaric acid (0.045 g/L) aqueous solution (taste-analyzing liquid chromatograph system reference solution)
Flow rate: 0.3 mL/min
Detection: Taste sensors (bitterness (+), bitterness (-), astringency, acid taste, umami, salty taste)

Measurement Samples

In the examples, evaluations were performed for the following compounds (cool sense stimulus components)
CA1: 2- Methyl- 3- (1- menthoxy)- 1, 2- propanediol
CA5: 2- (1- Menthoxy) ethanol
CA10: 3- (1- Menthoxy)- 1, 2- propanediol
CA20: 1- Menthyl 3- hydroxybutanoate
CA55: 2- (2- (1- Menthoxy) ethoxy) ethanol
CA38D: p- Menthane- 3, 8- diol
CAP: 1- Isopulegol
CAHK: 1- (2- Hydroxy- 4- methylcyclohexyl) ethanone
WS3: N- Ethyl- p- menthane- 3- carboxamide
WS23: 2- Isopropyl- N, 2, 3- trimethylbutaneamide
MMS: Monomenthyl succinate
ML: Menthyl lactate

<Reference Component>

1-Menthol

<Preparation of Sample Solution>

Each cool sense stimulus component (test component) was dissolved in a 30% ethanol aqueous solution to make the final concentration 0.3% (w/w).

<Correlation between Cool Sense Stimulus Component and Sensory Evaluation>

The cool sense stimulus component CA20 was measured according to the following procedure, using the second taste-analyzing liquid chromatograph system (see FIG. 6).

Because the prepared solution of CA20 is a single compound, measurement was made by bypassing the column 19.

For the measurement, the first 6-port 2-position valve 14 was set to the state as indicated by solid line in FIG. 6, the second 7-port 6-position valve 18 was set to the state where the port a was connected to the port b, the first 7-port 6-position valve 22 was set to the state where the port a was connected to the port d, and the second 6-port 2-position valve 23 was set to the state as indicated by dotted line in FIG. 6. The mobile phase selected by the first switch valve 11 was sucked by the first flow pump 12, and carried to the autosampler 13 from the port a of the first 6-port 2-position valve 14 via the port f. Here, a KCl (2.24 g/L) and tartaric acid (0.045 g/L) aqueous solution (reference solution for taste-analyzing liquid chromatograph system) was used as the mobile phase, and the flow rate was set to 0.3 mL/min.

Upon being injected into the mobile phase at a predetermined timing by the autosampler 13, the preparation solution of CA20 in the mobile phase was carried to the mixer 21 via the port c and port b of the first 6-port 2-position valve 14, and via the port a and port b of the second 7-port 6-position valve 18. Here, because the effects from the additives were not measured, the second flow pump 17 was not activated, and the preparation solution of CA20 directly passed through the mixer 21 and carried to the taste detecting part 30 via the ports a and d of the first 7-port 6-position valve 22, and the ports f and a and ports e and d of the second 6-port 2-position valve 23. The each taste sensors A to D produced detection signals as the sample passed through the taste detecting part 30, and the detection signals were sent to the signal processing part 40. In the signal processing part 40, each detection signal was subjected to a predetermined arithmetic process to obtain information concerning the preparation solution of CA20 (analyzed target). The results are presented in FIG. 7.

Specific reactions with the cool sense stimulus components are observed in the three taste sensors responsive to bitterness (+), bitterness (-), and astringency. As clearly represented in FIG. 7, the absolute value of each sensor reaction increased as the intensity of the sensor reaction increased from the first contact with the taste sensor, and the sensor reaction produced the maximum value $P(T_{max})$ at time $T_{max}$ at which the absolute value of the sensor reaction becomes the maximum after about 1 min from the first contact.

After $T_{max}$, the absolute value of sensor reaction decreases over time, and the intensity of the lingering perception of the sensory stimulus was evaluated by using $P(T_1)$ obtained at time $T_1$ at which the response ratio (the equation (3) above) of the absolute value of sensor reaction for the reference component (1- menthol) to $P(T_{max})$ becomes about 0.5. The $T_1$ values were 2 (min), 3 (min), and 3 (min) for the bitterness (+) sensor, the bitterness (- ) sensor, and the astringency sensor, respectively.

By using $T_1$ as the time at which the response ratio of the reference component (1- menthol) becomes 0.5, the sample was evaluated as having a smaller lingering perception than the reference component when the response ratio was below 0.5, and as having a larger lingering perception than the reference component when the response ratio was above 0.5. These results of the evaluations based on the magnitude of the response ratio were found to be correlated with the results of the sensory evaluations actually performed for the samples by a group of trained panelists.

In the measurement of CA20, reactions occurred mainly in the three taste sensors responsive to bitterness (+), bitterness (-), and astringency. The measurement result found a correlation between the lingering perception evaluation of CA20 using the taste sensors, and the lingering perception evaluation based on sensory evaluation. Because different compounds have different sensor reaction intensities, the sensors produce different maximum values. Further, because the sensors are disposed along the channel, the time at which the maximum value is produced is different for each sensor. Thus, percentage reduction from the maximum value was calculated by taking the ratio of the sensor maximum value to the value after a certain time period (2 or 3 min). The lingering perception concerning the CA20 was calculated according to the following equation (1), by weighting each sensor by a factor of 1 (the degree of contribution; see FIG. 7).

$$\text{Evaluation value} = \sum_{n=1}^{k} \frac{P_n(T_1)}{P_n(T_{max})} C_n \qquad (1)$$

In the equation, k is the number of taste sensors used for evaluation, n means the nth sensor, $P_n(T)$ is the absolute value of the sensor reaction at retention time T, $T_{max}$ is the time at which the absolute value of the sensor reaction has the maximum value, $T_1$ is the certain elapsed time from the time at which the absolute value of the sensor reaction has the maximum value ($T_1 \geq T_{max}$), and $C_n$ is a coefficient representing the degree of the contribution of the nth sensor reaction to the sensory intensity evaluation.

As a result, the evaluation value of CA20 is obtained from the equation (1) as follows.

$$\text{Evaluation value} = (\text{bitterness (+) value after 2 min /bitterness (+) maximum}$$
$$\text{value)} \times 1 + (\text{bitterness (-) value after 3 min/bitterness (-) maximum value)} \times 1 +$$
$$(\text{astringency value after 3 min/astringency maximum value)} \times 1 = 0.49.$$

<Sensory Stimulus Intensity Test>

(Example 1)

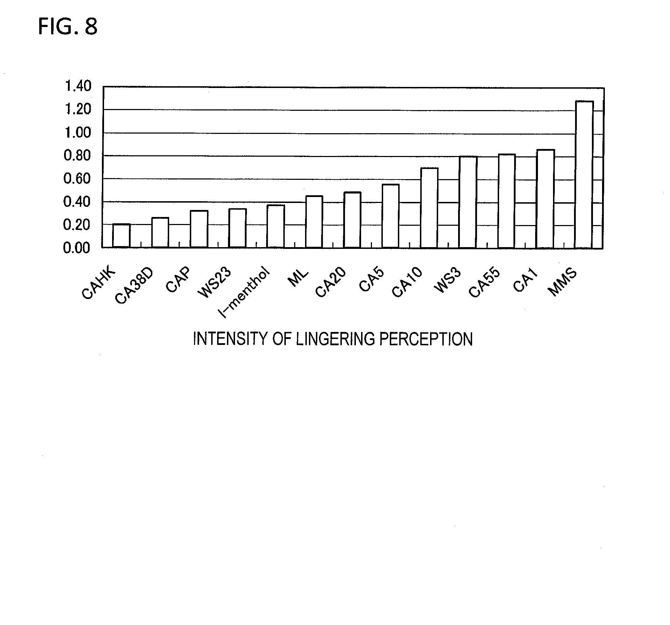

The cool sense stimulus component CA1 was measured by using the second taste- analyzing liquid chromatograph system (see FIG. 6) .
Cool sense stimulus intensities over the retention times of 2 min and 3 min were determined according to the foregoing equation (1) from the information obtained by the arithmetic process of the detection signal produced by each taste sensor (bitterness (+), bitterness (-), astringency) for the preparation solution of CA1. The results are presented in FIG. 8.

(Examples 2 to 13)

In Examples 2 to 13, cool sense stimulus intensities were determined in the same manner as in Example 1, using as the cool sense stimulus components CA5, CA10, CA20, CA55, CA38D, CAP, CAHK, WS3, WS23, MMS, and ML. The results are presented in FIG. 8.
As shown by the results presented in FIG. 8, it was possible to objectively evaluate the differences between the sensory stimuli of the each cool sense stimulus components, and the persistence of the sensory stimulus intensity.
With the evaluation method of the present invention, the sensory evaluation of sensory stimulus can be more specifically compared in numerical values, rather than using the human sense, and lingering perception of a sensory stimulus component can be evaluated more conveniently. That is, the evaluation of a sensory stimulus component associated with the skin or inside of the mouth can be performed more objectively and conveniently than the case using sensory evaluations that rely on the human or animal senses. The evaluation method of the present invention enables screening of various sensory stimulus components such as cool components and warm components, and evaluations of skin and oral conditions.
All documents cited herein are incorporated by reference.

Description of Reference Numerals and Signs

| | |
|---|---|
| 10a, 10b, 10c | Vessel |
| 11 | First switch valve |
| 12 | First flow pump |
| 14 | First 6-port 2-position valve |
| 15a, 15b, 15c | Vessel |
| 16 | Second switch valve |
| 17 | Second flow pump |
| 18 | Second 7-port 6-position valve |
| 19 | Column |
| 20 | Detector |
| 21 | Mixer |
| 22 | First 7-port 6-position valve |
| 23 | Second 6-port 2-position valve |
| 30 | Taste detecting part |
| 31 | Flow sensor |
| 32 | Sensor block |
| 33 | Polymer membrane |
| 34 | Electrode |

(continued)

| 35 | Plug |
| 36 | Channel block |
| 37 | Comparison electrode |
| 40 | Signal processing part |
| A to D | Taste sensors |

**Claims**

1.  A method for evaluating a sensory stimulus component in a test component with a taste-analyzing liquid chromatograph system,
    the method comprising:

    measuring the test component with the taste-analyzing liquid chromatograph system to obtain taste evaluation data; and
    evaluating a persistence of a sensory stimulus intensity of the test component from a continuous intensity change of the test component using the taste evaluation data as an index.

2.  The method according to claim 1, wherein a plurality of similar test components is measured with the taste-analyzing liquid chromatograph system to obtain taste evaluation data, and the test components are distinguished into similar groups to evaluate the persistence of sensory stimulus intensities of the test components using the taste evaluation data as an index.

3.  The method according to claim 1 or 2, wherein the taste-analyzing liquid chromatograph system includes:

    (a) a taste detecting part for detecting the sensory stimulus component in the test component over a time course, which includes a plurality of taste sensors each of which has a different response characteristic; and
    (b) a signal processing part that processes a detection signal obtained from the plurality of the taste sensors to determine taste evaluation data concerning each sensory stimulus component.

4.  The method according to claim 3, wherein the taste evaluation data is measured by using an intensity of a sensor reaction of the taste sensor as an index.

5.  The method according to claim 4, wherein the evaluation is based on a proportion of a magnitude of the intensity of the sensor reaction with respect to a maximum intensity value of the sensor reaction as measured after a certain elapsed time period from a time at which the sensor reaction has the maximum intensity value.

6.  The method according to claim 5, wherein the evaluation is based on an evaluation value calculated according to the following equation (1)

$$\text{Evaluation value} = \sum_{n=1}^{k} \frac{P_n(T_1)}{P_n(T_{\max})} C_n \qquad (1)$$

    wherein k is the number of taste sensors used for evaluation, n means the nth sensor, $P_n(T)$ is an absolute value of the sensor reaction at a retention time T, $T_{max}$ is a time at which the absolute value of the sensor reaction has the maximum value, $T_1$ is a certain elapsed time period from the time at which the absolute value of the sensor reaction has the maximum value ($T_1 \geq T_{max}$), and $C_n$ is a coefficient representing a degree of contribution of the nth sensor reaction to the sensory intensity evaluation.

7.  The method according to claim 4, wherein the evaluation is based on a cumulative value of a proportion of a magnitude of the intensity of the sensor reaction with respect to a maximum intensity value of the sensor reaction as measured after a certain elapsed time period from a time at which the sensor reaction has the maximum intensity value.

8. The method according to claim 7, wherein the evaluation is based on an evaluation value calculated according to the following equation (2)

$$\text{Evaluation value} \ = \sum_{n=1}^{k} ( \sum_{t=T_{\max}}^{T_1} \frac{P_n(t)}{P_n(T_{\max})} C_n ) \quad (2)$$

wherein k is the number of taste sensors used for evaluation, n means the nth sensor, $P_n(t)$ is an absolute value of the sensor reaction at a retention time t, $T_{\max}$ is a time at which the absolute value of the sensor reaction has the maximum value, $T_1$ is a certain elapsed time period from the time at which the absolute value of the sensor reaction has the maximum value ($T_1 \geq T_{\max}$), and $C_n$ is a coefficient representing a degree of contribution of the nth sensor reaction to the sensory intensity evaluation.

9. The method according to any one of claims 1 to 8, wherein the test component is a cool sense stimulus component or a warm sense stimulus component.

10. The method according to claim 9, wherein the cool sense stimulus component or the warm sense stimulus component reacts with taste sensors responsive to bitterness (+), bitterness (-), and astringency, and the taste evaluation data is measured by using intensities of the sensor reactions of the taste sensors as indices.

FIG. 1

EP 2 642 287 A2

FIG. 2

ACID TASTE

GENERAL-
PURPOSE

A →

A' →

32 BITTERNESS 1

BITTERNESS 2

UMAMI

31

37

BITTERNESS
(DRUG)

ASTRINGENCY

SALTY TASTE

FIG. 3

32

31

36

## FIG. 4

SAMPLE
SOLUTION

## FIG. 5

SAMPLE
SOLUTION

FIG. 6

EP 2 642 287 A2

FIG. 7

MEASUREMENT RESULT FOR CA20

A1: MAXIMUM VALUE OF BITTERNESS (+)
A2: $T_1$ OF BITTERNESS (+)
B1: MAXIMUM VALUE OF BITTERNESS (-)
B2: $T_1$ OF BITTERNESS (-)
C1: MAXIMUM VALUE OF ASTRINGENCY
C2: $T_1$ OF ASTRINGENCY

# FIG. 8

INTENSITY OF LINGERING PERCEPTION

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012064154 A
- JP 2002372530 A
- JP 2006075364 A
- US 2009148938 A1
- JP 3163351 A
- JP 2002243695 A
- JP 2001294546 A
- JP 2005343915 A
- JP 2007002005 A
- JP 2009263664 A
- JP 2010254621 A
- JP 2010254622 A
- JP 2011079953 A
- US 4136163 A
- US 4150052 A
- US 4178459 A
- US 4190643 A
- US 4193936 A
- US 4226988 A
- US 4230688 A
- US 4032661 A
- US 4153679 A
- US 4296255 A
- US 4459425 A
- US 5009893 A
- US 5266592 A
- US 5698181 A
- US 5725865 A
- US 5843466 A
- US 6231900 B1
- US 6277385 B1
- US 6280762 B1
- US 6306429 B1
- US 6432441 B1
- US 6455080 B1
- US 6627233 B1
- US 7078066 B2
- US 6783783 B2
- US 6884906 B2
- US 7030273 B1
- US 7090832 B2
- US 20040175489 A1
- US 20040191402 A1
- US 20050019445 A1
- US 20050222256 A1
- US 20050265930 A1
- US 2006015819 A1
- US 20060249167 A1
- EP 1689256 A1
- WO 2005082154 A
- WO 2005099473 A
- WO 2006058600 A
- WO 2006092076 A
- WO 2006125334 A
- JP 8225564 A
- JP 2007015953 A
- JP 2007510634 T
- JP 2008505868 T
- WO 2007013811 A
- WO 2003106404 A
- EP 1323356 A2
- DE 10351422 A1
- US 20050181022 A1
- US 20080038386 A1
- JP 2007327801 A